# EUROPÄISCHE PATENTSCHRIFT

(11) **EP 3 472 904 B1**
(45) Veröffentlichungstag und Bekanntmachung des Hinweises auf die Patenterteilung: **22.01.2020**
(21) Anmeldenummer: 17754250.3
(22) Anmeldetag: 03.08.2017
(51) Int. Cl.: H02B 1/38, E05D 5/12, E05D 5/10, E05D 5/06

(54) **SCHARNIERANORDNUNG FÜR EINEN SCHALTSCHRANK**
HINGE ARRANGEMENT FOR AN ELECTRIC CABINET
ENSEMBLE DE CHARNIÈRE POUR UNE ARMOIRE ELECTRIQUE

(30) Priorität: 15.09.2016 DE 102016117378
(43) Veröffentlichungstag der Anmeldung: 24.04.2019
(73) Patentinhaber: Rittal GmbH & Co. KG, 35745 Herborn (DE)
(72) Erfinder: REUTER, Wolfgang, 56479 Liebenscheid (DE); SCHINDLER, Timo, 35075 Gladenbach (DE)
(74) Vertreter: Angerhausen, Christoph
(86) Internationale Anmeldenummer: PCT/DE2017/100657
(87) Internationale Veröffentlichungsnummer: WO 2018/050151

(56) Entgegenhaltungen:
- DE-U1- 9 207 804
- US-B1- 6 283 565

## Beschreibung

Die Erfindung geht aus von einer Scharnieranordnung für einen Schaltschrank, mit einer gehäuseseitigen Scharnierhälfte und einer türseitigen Scharnierhälfte, die verschwenkbar zueinander miteinander verbunden sind. Die gehäuseseitige Scharnierhälfte weist einen Montageflansch zur Befestigung an einem Vertikalprofil eines Schaltschrankgehäuses sowie zwei sich in Vertikalrichtung erstreckende, in der Vertikalrichtung unter einem Abstand zueinander angeordnete und mit ihren freien Enden einander zugewandte Scharnierbolzen auf. Die Scharnierbolzen sind in jeweils einem Bolzensitz der gehäuseseitigen Scharnierhälfte aufgenommen. Eine derartige Scharnieranordnung ist aus der DE 197 23 555 C2 und DE 92 07 804 U bekannt. Ähnliche Scharnieranordnungen beschreiben auch die DE 297 20 515 U1, die DE 198 17 245 A1 und die WO 2013/110292 A1.

Die bekannten Scharnieranordnungen haben den Nachteil, dass sie bei der Montage vergleichsweise aufwendig sind. Ist die türseitige Scharnierhälfte beispielsweise an einem schaltschrankseitigen Türelement und die gehäuseseitige Scharnierhälfte beispielsweise an dem Vertikalprofil eines Schaltschrankgehäusekorpus vormontiert, so müssen für die Montage der Tür am Gehäuse die beiden Scharnierhälften zusammengeführt werden, so dass die Bolzen der gehäuseseitigen Scharnierhälfte mit einer Bolzenaufnahme der türseitigen Scharnierhälfte fluchten. Ist dies gelungen, müssen unter Beibehaltung der beschriebenen Vorausrichtung zwischen Tür und Gehäuse die Scharnierbolzen der gehäuseseitigen Scharnierhälfte in die Bolzenaufnahme der türseitigen Scharnierhälfte eingeschlagen werden, um die Scharnierhälften aneinander festzulegen. Um eine Beschädigung der Scharnieranordnung beim Einschlagen der Scharnierbolzen aufgrund einer Fehlausrichtung von Türelement und Schaltschrankkorpus zueinander zu vermeiden, ist für das Einschlagen der Scharnierbolzen insbesondere für ungeübte Anwender häufig die Hinzuziehung einer zweiten Person erforderlich.

Es ist daher die Aufgabe der Erfindung, eine Scharnieranordnung für einen Schaltschrank der eingangs beschriebenen Art derart weiter zu entwickeln, dass sie eine möglichst unkomplizierte Verbindung der beiden Scharnierhälften ermöglicht.

Diese Aufgabe wird durch eine Scharnieranordnung mit den Merkmalen des Anspruchs 1 gelöst. Die abhängigen Ansprüche betreffen jeweils vorteilhafte Ausführungsformen der Erfindung.

Demgemäß ist vorgesehen, dass die Scharnierbolzen in ihrem jeweiligen Bolzensitz zumindest in der Vertikalrichtung unbeweglich aufgenommen sind und über ihre freien Enden aus dem jeweiligen Bolzensitz herausragen, wobei die türseitige Scharnierhälfte eine Bolzenaufnahme mit einer vertikalen Abmessung aufweist, die kleiner oder gleich dem Abstand der freien Enden der Scharnierbolzen ist. Die Scharnieranordnung ermöglicht es damit, dass die türseitige Scharnierhälfte allein durch einen einfachen Einhängevorgang mit der gehäuseseitigen Scharnierhälfte verbunden werden kann. Es ist nicht mehr erforderlich, dass nach dem Ausrichten von gehäuseseitiger und türseitiger Scharnierhälfte zueinander die Scharnierbolzen in die Bolzenaufnahme der türseitigen Scharnierhälfte eingeschlagen werden. Je nachdem, ob die gehäuseseitige Scharnierhälfte für den Linksanschlag oder den Rechtsanschlag an dem Schaltschrankgehäuse befestigt ist, kann die türseitige Scharnierhälfte in den jeweils unten liegenden und mit seinem freien Ende nach oben zeigenden Scharnierbolzen eingehängt werden.

Die gehäuseseitige Scharnierhälfte kann symmetrisch zu einer Ebene sein, die senkrecht zu der Vertikalrichtung und damit auch senkrecht zu einer Scharnierachse der Scharnieranordnung verläuft, so dass die türseitige Scharnierhälfte wahlweise für einen Linksanschlag eines Türelements oder für den Rechtsanschlag eines Türelements an einem linksseitigen oder einem rechtsseitigen Vertikalprofil eines Schaltschrankgehäuses montiert werden kann.

Die gehäuseseitige Scharnierhälfte kann bei einem Ersten von Linksanschlag und Rechtsanschlag über einen ersten ihrer beiden Scharnierbolzen mit der türseitigen Scharnierhälfte, insbesondere mit deren Bolzenaufnahme, in Eingriff stehen, wobei die gehäuseseitige Scharnierhälfte bei dem zweiten von Linksanschlag und Rechtsanschlag über den zweiten ihrer beiden Scharnierbolzen mit der türseitigen Scharnierhälfte, insbesondere deren Bolzenaufnahme, in Eingriff steht.

Die gehäuseseitige Scharnierhälfte kann an ihrer der türseitigen Scharnierhälfte zugewandten Innenseite mindestens eine Nut aufweisen, in die ein Vorsprung am Außenumfang der türseitigen Scharnierhälfte in der Offenstellung der türseitigen Scharnierhälfte formschlüssig eingreift und die türseitige Scharnierhälfte in Vertikalrichtung und damit in Axialrichtung der Scharnierbolzen festlegt. Der Vorsprung und die mindestens eine Nut können derart zueinander angeordnet sein, dass sie ab einem bestimmten Öffnungswinkel formschlüssig ineinander greifen und somit die türseitige Scharnierhälfte an der gehäuseseitigen Scharnierhälfte festlegen. Es kann beispielsweise vorgesehen sein, dass die türseitige Scharnierhälfte nur in einem teilgeöffneten Zustand aus der gehäuseseitigen Scharnierhälfte ausgehoben werden kann. Der Vorsprung kann an seinem der mindestens einen Nut zugewandten Außenumfang eine im Wesentlichen sphärische Oberfläche aufweisen, die in einer komplementären Bodenfläche der Nut formschlüssig anliegt. Die Länge des Vorsprungs entlang der sphärischen Außenfläche kann dazu eingerichtet sein, über einen bestimmten Öffnungswinkelbereich in der Nut zumindest teilweise formschlüssig aufgenommen zu sein, um dementsprechend die türseitige Scharnierhälfte über den Winkelbereich in Vertikalrichtung festzulegen, so dass ein Ausheben der türseitigen Scharnierhälfte aus der gehäuseseitigen Scharnierhälfte unmöglich ist.

Die gehäuseseitige Scharnierhälfte kann an ihrer der türseitigen Scharnierhälfte zugewandten Innenseite mindestens eine erste und eine zweite Nut aufweisen, wobei bei einem ersten von Linksanschlag und Rechtsanschlag der Vorsprung in die erste Nut formschlüssig eingreift, und wobei bei dem zweiten von Linksanschlag und Rechtsanschlag der Vorsprung in die zweite Nur formschlüssig eingreift.

Die Bolzensitze der gehäuseseitigen Scharnierhälfte und der jeweilige Scharnierbolzen können einteilig ausgebildet sein. Die gehäuseseitige Scharnierhälfte kann dazu beispielsweise als ein Spritzgussformteil ausgebildet sein.

Die gehäuseseitige Scharnierhälfte kann jedoch auch als ein Blechformteil ausgebildet sein. Dieses hat gegenüber einem Gussbauteil den Vorteil, kostengünstig in der Herstellung zu sein. Beispielsweise können die Bolzensitze der gehäuseseitigen Scharnierhälfte eine ringförmige Blechlasche aufweisen oder als solche ausgebildet sein, in die jeweils einer der Scharnierbolzen über einen Steckabschnitt eingesetzt ist, wobei die Blechlasche mit dem Steckabschnitt fest verbunden, insbesondere verpresst, verschweißt oder verklebt ist.

Der Steckabschnitt des Scharnierbolzens kann über einen Flansch am Außenumfang des Scharnierbolzens in das freie Ende des Scharnierbolzens übergehen, wobei der Flansch an seiner dem Bolzensitz zugewandten Seite eine Auflagefläche aufweist, über die der Scharnierbolzen formschlüssig auf einer Stirnseite des Bolzensitzes aufliegt, und wobei der Flansch an seiner dem Bolzensitz abgewandten Seite eine Gleitlagerfläche aufweist, über die die gehäuseseitige Scharnierhälfte auf einer Stirnfläche der Bolzenaufnahme der türseitigen Scharnierhälfte beweglich lagert.

Die Gleitlagerfläche kann aufgeraut oder geriffelt sein, so dass bei auf der Gleitlagerfläche aufgesetzter türseitiger Scharnierhälfte ein Potentialausgleich zwischen den Scharnierhälften hergestellt wird. Beispielsweise kann die türseitige Scharnierhälfte und damit auch deren der Gleitlagerfläche zugewandte Stirnfläche produktionsseitig lackiert sein, so dass mit dem Verschwenken einer Tür, an der die türseitige Scharnierhälfte verbunden ist, die Lackschicht aufgebrochen wird.

Die Bolzensitze der gehäuseseitigen Scharnierhälfte können über eine Randseite des Montageflansches an dem Montageflansch angeformt sein, wobei auf halbem Abstand zwischen den beiden freien Enden der einander zugewandten Scharnierbolzen ein Arretierungshaken ausgehend von der Randseite in Richtung der Scharnierbolzen und senkrecht zur Axialrichtung der Scharnierbolzen vorspringt, und wobei der Arretierungshaken an seinen gegenüberliegenden, jeweils einem der Scharnierbolzen zugewandten Seiten jeweils einen Anschlag für die türseitige Scharnierhälfte aufweist.

Die Bolzenaufnahme der türseitigen Scharnierhälfte kann an ihrem Außenumfang eine unrunde Geometrie mit einem vorspringenden Ansatz aufweisen, wobei in der Offenstellung der türseitigen Scharnierhälfte der vorspringende Ansatz und der Arretierungshaken überlappen, so dass sich je nach Anschlagsseite der türseitigen Scharnierhälfte eine der Anschlagsflächen und der vorspringende Ansatz gegenüberstehen. Die türseitige Scharnierhälfte kann ein geformter Blechstreifen sein, bei dem der vorspringende Ansatz an einem Übergang zwischen einer Befestigungsseite für die Montage der türseitigen Scharnierhälfte an einem Türelement und der Bolzenaufnahme angeordnet ist. Der vorspringende Ansatz und die Befestigungsseite können schließlich über einen gekerbten Abschnitt des Blechstreifens miteinander verbunden sein.

Um ein versehentliches Herausheben der türseitigen Scharnierhälfte aus der gehäuseseitigen Scharnierhälfte zu vermeiden, kann eine Aushebesicherung vorgesehen sein, die einerseits über eine obere Stirnfläche der türseitigen Scharnierhälfte auf die türseitige Scharnierhälfte aufgesetzt und in die Bolzenaufnahme hineinragt, und in die andererseits der in der Vertikalrichtung obere der beiden Scharnierbolzen hineinragt.

Dazu kann die Aushebesicherung einen Zylinderkörper mit einem oberen und einem unteren Ende aufweisen, wobei das obere Ende eine Steckaufnahme mit einem Einsteckkonus am Innenumfang und das untere Ende einen Zapfenvorsprung mit einem unteren Einsteckkonus am Außenumfang aufweist.

Weitere Einzelheiten der Erfindung werden anhand der nachstehenden Figuren erläutert. Dabei zeigt:
- Figur 1: eine Detailansicht des Schaltschranks unter Verwendung einer Scharnieranordnung nach einer Ausführungsform;
- Figur 2: den Schaltschrank nach Figur 1 mit entferntem Türelement und Seitenteil;
- Figur 3: eine Ausführungsform einer gehäuseseitigen Scharnierhälfte einer Scharnieranordnung;
- Figur 4: eine Querschnittsansicht des Bolzensitzes der gehäuseseitigen Scharnierhälfte gemäß Figur 3;
- Figur 5: eine Ausführungsform einer türseitigen Scharnierhälfte;
- Figur 6: eine Seitenansicht eines Scharnierbolzens gemäß einer Ausführungsform;
- Figur 7: eine perspektivische Ansicht des Scharnierbolzens nach Figur 6;
- Figur 8: eine perspektivische Ansicht einer weiteren Ausführungsform einer gehäuseseitigen Scharnierhälfte;
- Figur 9: eine Schaltschrankanordnung unter Verwendung der gehäuseseitigen Scharnierhälfte nach Figur 8;
- Figur 10: eine Aushebesicherung nach einer Ausführungsform der Erfindung; und
- Figur 11: eine beispielhafte Einbausituation der Aushebesicherung gemäß Figur 10.

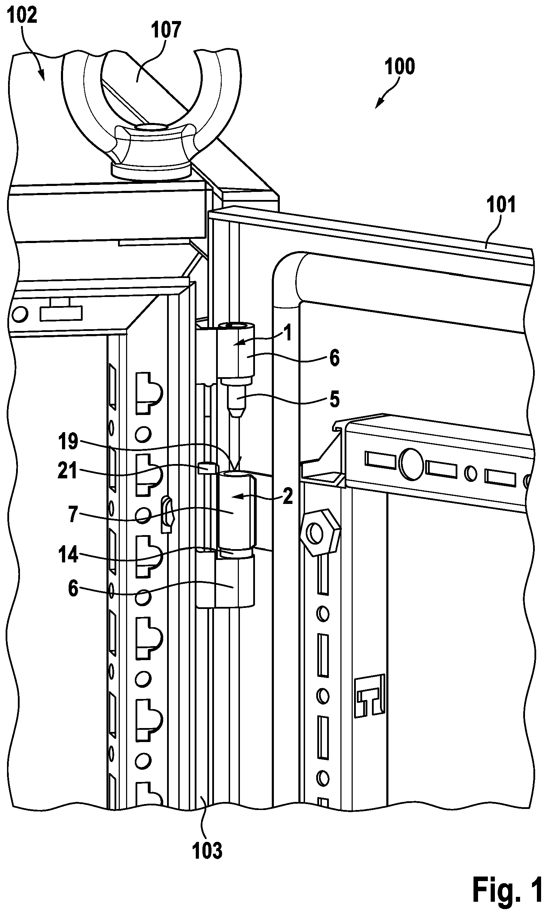

Die Figur 1 zeigt eine Detailansicht eines Schaltschranks 100, an dessen Gehäuse 102 ein Türelement 101 im Rechtsanschlag verschwenkbar über die Scharnieranordnung eingehängt ist. Zur besseren Veranschaulichung ist lediglich die obere Scharnieranordnung gezeigt. Eine identische Scharnieranordnung ist in Vertikalrichtung des Schaltschanks 100 weiter unten angeordnet, um einen weiteren Befestigungs- und Drehpunkt für die Verschwenkung des Türelements 101 gegenüber dem Gehäuse 102 bereitzustellen.

Wie zu erkennen ist, ist die erfindungsgemäße Scharnieranordnung nach der Art eines Einhängescharniers ausgebildet. Die gehäuseseitige Scharnierhälfte 1 ist dazu an einem Vertikalprofil 103 des Rahmengestells des Schaltschrankgehäuses 102 festgelegt. Das Vertikalprofil kann beispielsweise eine Geometrie aufweisen, wie sie aus der DE 10 2014 101 404 A1 bekannt ist.

Die Anordnung gemäß Figur 1 zeigt weiterhin, dass das e Scharnier 1, 2 aufgrund seines zur Horizontalebene symmetrischen Aufbaus wahlweise für den Linksanschlag oder für den Rechtsanschlag verwendet werden kann, wobei in dem Fall, dass die in Figur 1 gezeigte gehäuseseitige Scharnierhälfte 1 für den Linksanschlag verwendet wird, die türseitige Scharnierhälfte 2 dann mit dem in der Darstellung oberen Scharnierbolzen 5 zusammenwirkt, mithin die türseitige Scharnierhälfte 2 in diesen, in der Anwendungsvariante gemäß Figur 1 funktionslosen Scharnierbolzen 5 eingehängt ist. Es ist weiterhin zu erkennen, dass die gehäuseseitige Scharnierhälfte 1 einen Arretierungshaken 21 aufweist, über welchen die türseitige Scharnierhälfte 2, je nach dem, ob die Scharnieranordnung für den Linksanschlag oder den Rechtsanschlag verwendet wird, auf dem jeweiligen Bolzensitz 6 beziehungsweise zugehörigen Scharnierbolzen 5 arretiert wird. Der Arretierungshaken 21 und die türseitige Scharnierhälfte 2 können derart aufeinander abgestimmt sein, dass die türseitige Scharnierhälfte 2 beziehungsweise das Türelement 101, an dem die türseitige Scharnierhälfte 2 festgelegt ist, nur bei einer bestimmten Winkelstellung der türseitigen Scharnierhälfte 2 in Bezug auf die gehäuseseitige Scharnierhälfte 1 aus der gehäuseseitigen Scharnierhälfte 1 ausgehoben werden kann.

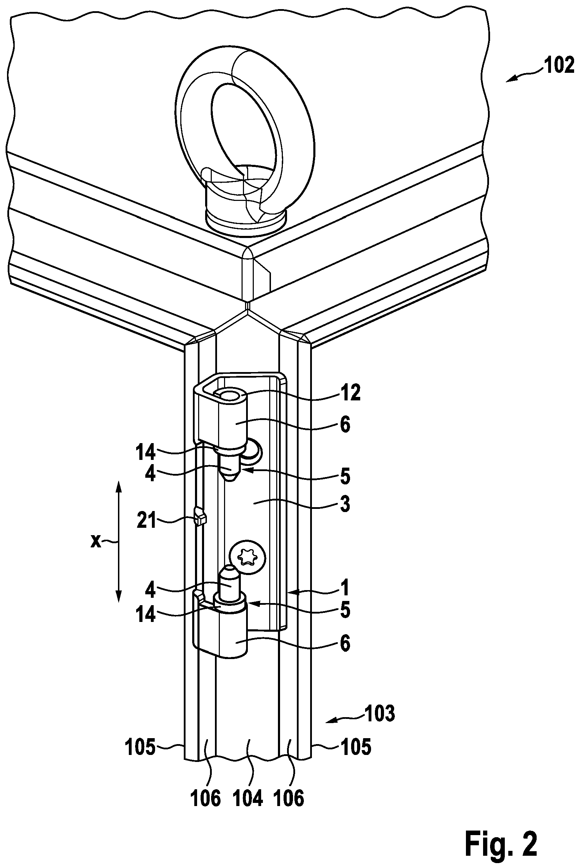

Ergänzend zur Figur 1 lässt Figur 2 erkennen, dass die gehäuseseitige Scharnierhälfte 1 einen Montageflansch 3 aufweist, der an eine Aufnahmekontur des Vertikalprofils 103 des Rahmengestells des Schaltschrankgehäuses 102 angepasst ist. Beispielsweise kann das Vertikalprofil dazu eine hinterschnittige Kontur aufweisen, in der der Montageflansch formschlüssig aufgenommen und über eine Bolzenverbindung festgelegt ist. Beispielsweise kann das Vertikalprofil einen ersten und einen zweiten Dichtsteg 106 mit endseitigen Dichtkanten 105 aufweisen, die senkrecht zueinander ausgerichtet sind und somit Dichtkanten an zwei senkrecht zueinander stehenden Seitenflächen des Schaltschrankgehäuses bereitstellen. Die Dichtstege 106 können über einen Verbindungsabschnitt 104 miteinander verbunden sein, wobei die Anordnung aus Dichtstegen 106 und Verbindungsabschnitt 104 gerade die Aufnahme für den formschlüssigen Sitz des Montageflanschs 3 bilden.

Die Figur 2 lässt weiterhin bereits erkennen, dass die gehäuseseitige Scharnierhälfte 1 als ein einfaches Blechformteil ausgebildet sein kann, wobei die Bolzensitze 6 für die Scharnierbolzen 5 eine ringförmig ausgebildete Blechlasche sind, in die der jeweilige Bolzen 5 beispielsweise im Presssitz aufgenommen ist.

Sämtliche Ausführungsformen der Erfindung haben es gemeinsam, dass die Scharnierbolzen 5 zumindest in Axialrichtung zueinander unverstellbar fest angeordnet sind, wodurch sich die erfindungsgemäße Scharnieranordnung von den aus dem Stand der Technik bekannten Scharnieranordnungen deutlich unterscheidet. Dazu weisen die freien Enden 4 der Scharnierbolzen 5 gerade einen Abstand auf, der größer ist als eine vertikale Abmessung der Bolzenaufnahme 7 der türseitigen Scharnierhälfte 2. Bei der Ausführungsform gemäß den Figuren 1 und 2 weist die Bolzenaufnahme 7 eine Abmessung in Axialrichtung auf, die gerade kleiner oder gleich dem Abstand zwischen dem jeweiligen Flansch 14 der Bolzen 5 und einem zugordneten Anschlag des Arretierungshakens 21 ist.

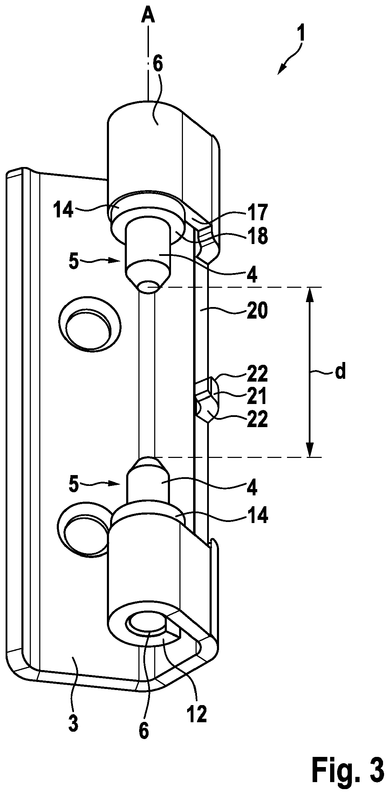

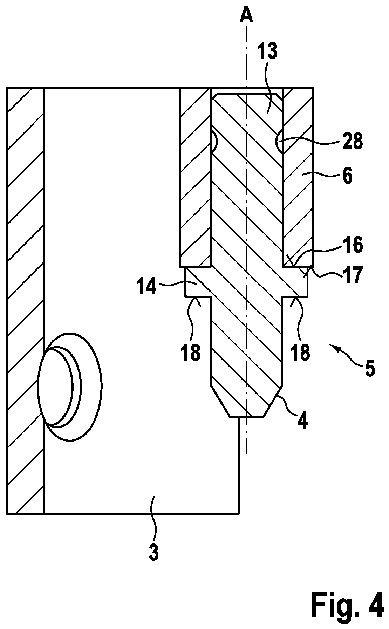

Wie in der Zusammenschau der Figuren 3 und 4 gezeigt ist, ist der Scharnierbolzen 5 mit seinem Steckabschnitt 13 in dem Bolzensitz 6 der gehäuseseitigen Scharnierhälfte 1 form- und kraftschlüssig aufgenommen. Zur Herstellung einer Quetschverbindung weist der Steckabschnitt 13 an seinem Außenumfang eine umlaufende Nut 28 auf, über die der Bolzensitz 6 mit dem Steckabschnitt 13 verpresst werden kann. Der Abstand d zwischen den freien Enden 4 der Scharnierbolzen 5, über die der Scharnierbolzen 5 aus dem jeweiligen Bolzensitz 6 herausragt, ist gerade so gewählt, dass er kleiner oder gleich der Abmessung der türseitigen Scharnierhälfte 2 in der eingezeichneten Axialrichtung A ist (vergleiche Figur 2), so dass für das Einhängen der türseitigen Scharnierhälfte 2 in die gehäuseseitige Scharnierhälfte 1 die Bolzenaufnahme 7 zwischen den freien Enden 4 der Scharnierbolzen 5 hindurch geführt werden kann, um die Bolzenaufnahme 7 in Bezug auf den jeweils in Vertikalrichtung unteren Scharnierbolzen 5 auszurichten und die türseitige Scharnierhälfte 2 über ihre Bolzenaufnahme 7 auf das freie Ende 4 des Scharnierbolzens 5 einzuhängen.

Der Arretierungshaken 21 erstreckt sich von einer Randseite 20 des Montageflansches 3 in Richtung der in Figur 3 eingezeichneten Scharnierachse A, wobei er an in Vertikalrichtung gegenüberliegenden Seiten jeweils einen Anschlag 22 aufweist, über den die türseitige Scharnierhälfte 2 abhängig von ihrem Öffnungswinkel blockiert oder freigegeben wird. Der Scharnierbolzen 5 weist weiterhin einen umlaufenden Flansch 14 auf, der zwei in Vertikalrichtung x gegenüberliegende Flächen aufweist. Mit einer ersten der Flächen lagert der Bolzen 5 auf einer Stirnseite 17 des jeweiligen Bolzensitzes 6. Die jeweils gegenüberliegende, von dem Bolzensitz 6 abgewandte Fläche bildet eine Gleitlagerfläche, auf der die Bolzenaufnahme 7 der türseitigen Scharnierhälfte 2 verschieblich lagert, wenn die türseitige Scharnierhälfte 2 über den einen oder den anderen Scharnierbolzen 5, je nach dem ob ein Rechtsanschlag oder ein Linksanschlag vorliegt, verschwenkbar lagert. Es ist wiederum zu erkennen, dass der Bolzensitz 6 als eine Blechlasche 12 ausgebildet ist, die sich von der Randseite 20 des Montageflansches 3 ausgehend erstreckt und endseitig zu einer ringförmigen Blechlasche 12, die den Bolzensitz 6 bildet, umgeformt ist.

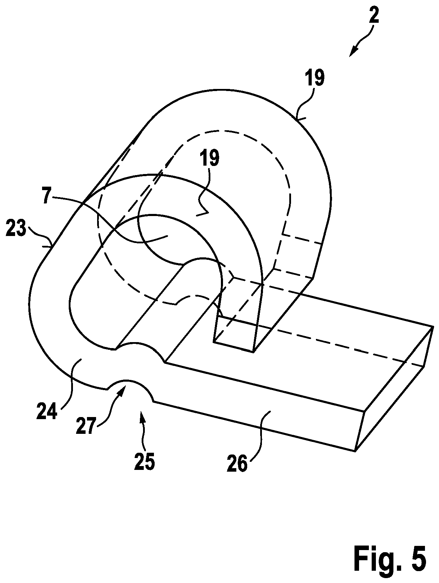

Die Figur 5 zeigt eine beispielhafte Ausführungsform einer türseitigen Scharnierhälfte 2, die in Verbindung mit einer gehäuseseitigen Scharnierhälfte verwendet werden kann, wie sie in den vorangegangenen Figuren gezeigt ist. Es ist wiederum zu erkennen, dass die türseitige Scharnierhälfte 2 analog zu der in den vorangegangenen Figuren gezeigten Ausführungsform einer gehäuseseitigen Scharnierhälfte als ein einfaches und damit kostengünstiges Blechformteil ausgebildet sein kann. Insbesondere ist es möglich, die türseitige Scharnierhälfte durch wenige formgebende Bearbeitungsschritte eines Blechstreifens auszubilden. Es sind keine darüber hinausgehenden Bearbeitungsschritte, etwa spanende Bearbeitungsschritte, erforderlich.

Die türseitige Scharnierhälfte 2 besteht im Wesentlichen aus einer Befestigungsseite 26, die über einen Übergang 25, der einen gekerbten Abschnitt 27 aufweist, in die Bolzenaufnahme 7 übergeht. Der gekerbte Abschnitt 27 weist an dem Außenumfang 23 der türseitigen Scharnierhälfte 2 eine Nut oder Kerbe auf, die sich senkrecht zu der Längsrichtung des Blechstreifens der türseitigen Scharnierhälfte 2 beziehungsweise parallel zu der Scharnierachse der Bolzenaufnahme 7 erstreckt. Angrenzend an den gekerbten Abschnitt 27 weist die türseitige Scharnierhälfte 2 einen vorspringenden Ansatz 24 auf, so dass die Bolzenaufnahme 7 eine unrunde Geometrie aufweist und insbesondere im Bereich des vorspringenden Ansatzes 24 radial zur Scharnierachse erweitert ist. In der Zusammenschau mit den Figuren 1 bis 4 lässt sich erkennen, dass je nach Öffnungswinkel des Türelements 101 (siehe Figur 1) die türseitige Scharnierhälfte 2 über ihren vorspringenden Ansatz 24 mit dem Arretierungshaken 21 überlappt, so dass das Türelement 101 nicht aus der gehäuseseitigen Scharnierhälfte 1 ausgehoben werden kann. Erst wenn das Türelement 101 einen bestimmten Öffnungswinkel aufweist, bei dem gerade der vorspringende Ansatz 24, in Vertikalrichtung gesehen, nicht mehr mit dem Arretierungshaken überlappt, kann das Türelement 101 aus der gehäuseseitigen Scharnierhälfte 1 ausgehoben werden.

Auch die türseitige Scharnierhälfte 2 ist als vollständig symmetrisches Bauteil ausgebildet, wobei die gegenüberliegenden Stirnseiten 19 wiederum, je nach Anschlagseite, auf der Gleitlagerfläche 18 des Flansches 14 des jeweils in Vertikalrichtung unteren Scharnierbolzens 5 verschieblich aufliegt.

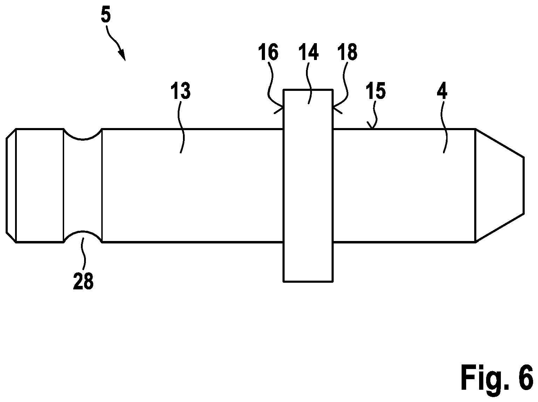

Eine Querschnittsansicht für einen Scharnierbolzen ist in Figur 6 gezeigt. Der Scharnierbolzen 5 besteht im Wesentlichen aus einem Steckabschnitt 13, der über einen umlaufenden Flansch 14 in das freie Ende 4 übergeht. Die Spitze des freien Endes 4 ist konisch ausgebildet, um das Einfädeln des Bolzens 5 in die Bolzenaufnahme 7 der türseitigen Scharnierhälfte 2 zu erleichtern. Der Steckabschnitt 13 weist eine umlaufende Nut 28 auf, über die der Scharnierbolzen 5 mit dem Bolzensitz 6 der gehäuseseitigen Scharnierhälfte 1 verpresst werden kann. Der Flansch 14 ist als umlaufender Ringflansch ausgebildet, mit zwei sich senkrecht zur Längsachse des Bolzens 5 erstreckenden Flächen 16, 18, wobei die dem freien Ende 4 zugewandte Fläche 18 eine Gleitlagerfläche bildet, auf der eine türseitige Scharnierhälfte 2 über ihre Stirnfläche 19 verschieblich zur Anlage kommen kann, und wobei die dem Steckabschnitt 13 zugewandte Fläche 16 eine Auflagefläche ist, die einen Anschlag bildet, über den der Scharnierbolzen 5 auf einer Stirnseite 17 des Bolzensitzes 6 zur Anlage kommt, um den Scharnierbolzen 5 exakt gegenüber dem Bolzensitz 6 und damit den Vertikalabstand zwischen den beiden Scharnierbolzen 5 der gehäuseseitigen Scharnierhälfte 1 präzise einzustellen.

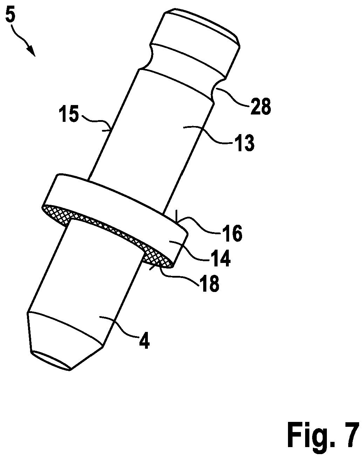

Die Figur 7 zeigt den Scharnierbolzen 5 gemäß Figur 6 in perspektivischer Ansicht. Die Gleitlagerfläche 18 ist aufgeraut oder geriffelt, so dass bei auf der Gleitlagerfläche 18 aufgesetzter türseitiger Scharnierhälfte ein Potentialausgleich zwischen den Scharnierhälften hergestellt wird. Beispielsweise kann die an einer Schaltschranktür vormontierte türseitige Scharnierhälfte und damit auch deren der Gleitlagerfläche 18 zugewandte Stirnfläche 19 (siehe Figur 5) produktionsseitig zusammen mit der Tür tauchlackiert sein, so dass mit dem Verschwenken einer Tür, an der die türseitige Scharnierhälfte verbunden ist, die Lackschicht aufgebrochen wird.

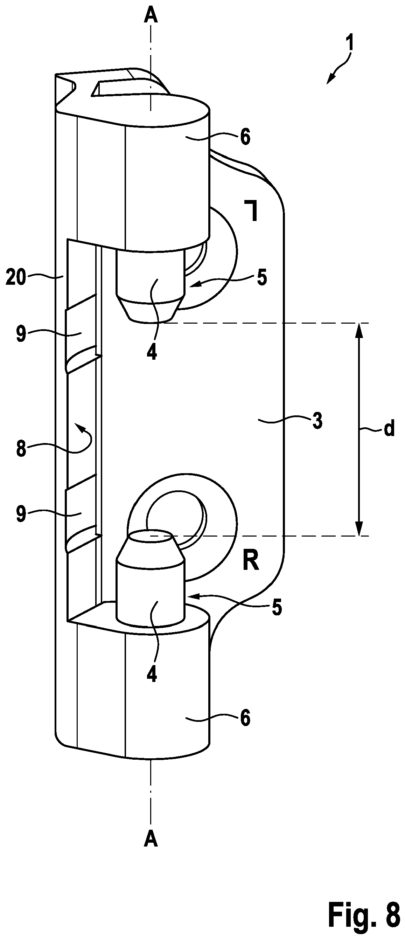

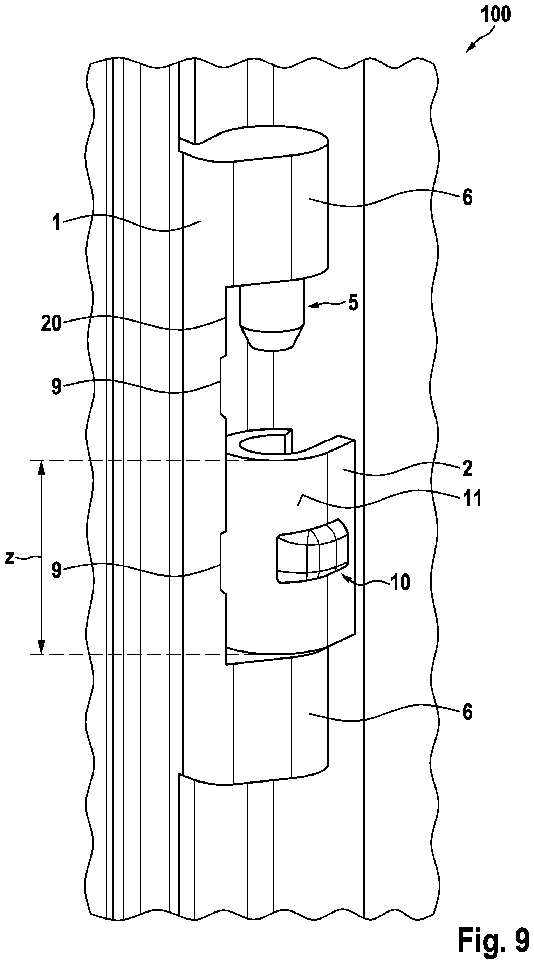

Die Figuren 8 und 9 beschreiben eine weitere Ausführungsform einer Scharnieranordnung, welche sich im Wesentlichen in zwei Aspekten von den zuvor beschriebenen Ausführungsformen unterscheidet. Auch wenn die nachfolgend beschriebenen Unterscheidungsaspekte in der Ausführungsform gemäß den Figuren 8 und 9 vereint sind, so wird der Fachmann erkennen, dass diese auch einzeln zur Anwendung kommen können, beispielsweise in Abänderung der zuvor beschriebenen Ausführungsformen.

Ein erster Aspekt betrifft den Umstand, dass die erste und die zweite Scharnierhälfte 1, 2 als Gussteile ausgebildet sind und damit nicht als Blechformteile. Dementsprechend sind die Scharnierbolzen 5 und der Bolzensitz 6 einteilig ausgebildet. Ein weiterer Aspekt betrifft die öffnungswinkelabhängige Arretierung der türseitigen Scharnierhälfte 2 in Bezug auf die gehäuseseitige Scharnierhälfte 1. Dazu ist bei der in den Figuren 8 und 9 gezeigten Ausführungsform vorgesehen, dass der Montageflansch 3 angrenzend an seine Längskante 20, über die die Bolzensitze 6 an den Montageflansch 3 angeformt sind, mindestens eine Nut 9 aufweist, in die ein Vorsprung 10 am Außenumfang 11 der türseitigen Scharnierhälfte 2 öffnungswinkelabhängig formschlüssig eingreift, um so die türseitige Scharnierhälfte 2 gegenüber der gehäuseseitigen Scharnierseite 1 festzulegen oder freizugeben. Es ist zu erkennen, dass der Montageflansch 3 zwei Nuten 9 aufweist, wobei eine erste Nut 9 dem in der Darstellung gemäß Figur 8 oberen Scharnierbolzen 5 zugeordnet ist, und wobei eine zweite Nut 9 dem in der Darstellung gemäß Figur 8 unteren Scharnierbolzen 5 zugeordnet ist. Die Zusammenschau der Figuren 8 und 9 lässt erkennen, dass je nach dem, ob die Scharnieranordnung für den Linksanschlag oder den Rechtsanschlag an einem Vertikalprofil eines Schaltschranks angeordnet ist, der Vorsprung 10 öffnungswinkelabhängig mit der in der Darstellung gemäß Figur 8 oberen oder unteren Nut 9 in Eingriff treten kann. Die Nuten 9 sind zu der Randseite 20 des Montageflansches 3 geöffnet, um ein widerstandsloses Hineingleiten des Vorsprungs 10 beim Verschwenken der türseitigen Scharnierhälfte 2 zu ermöglichen. Es ist nachvollziehbar, dass der Winkelbereich, in dem ein Herausheben der türseitigen Scharnierhälfte 2 aus der gehäuseseitigen Scharnierhälfte 1 blockiert sein soll, gerade über die Länge des Vorsprungs 10 entlang des Außenumfangs 11 der türseitigen Scharnierhälfte 2 eingestellt werden kann.

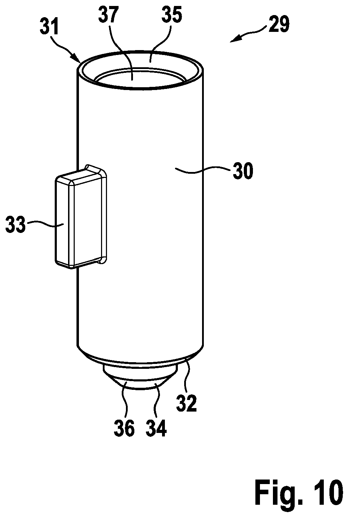

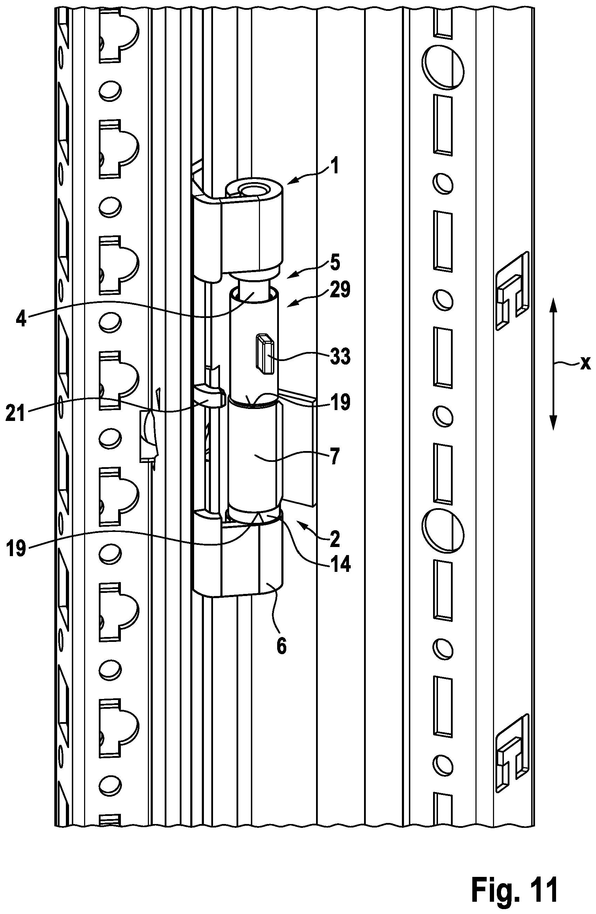

Um ein versehentliches Herausheben der türseitigen Scharnierhälfte aus der gehäuseseitigen Scharnierhälfte zu vermeiden, kann eine Aushebesicherung 29 gemäß Figur 10 vorgesehen sein, die, wie in Figur 11 gezeigt ist, einerseits über eine obere Stirnfläche 19 der türseitigen Scharnierhälfte 2 auf die türseitigen Scharnierhälfte 2 aufgesetzt und in die Bolzenaufnahme 7 hineinragt, und in die andererseits der in der Vertikalrichtung x obere der beiden Scharnierbolzen 5 hineinragt. Die Aushebesicherung 29 weist einen Zylinderkörper 30 mit einem oberen und einem unteren Ende 31, 32 auf, wobei das obere Ende 31 eine Steckaufnahme 37 mit einem Einsteckkonus 35 am Innenumfang und das untere Ende 32 einen Zapfenvorsprung 34 mit einem unteren Einsteckkonus 36 am Außenumfang aufweist. Ein Griffstück 33 am Außenumfang des Zylinderkörpers 30 dient der einfachen Handhabung der Aushebesicherung 29.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: gehäuseseitige Scharnierhälfte
- 2: türseitige Scharnierhälfte
- 3: Montageflansch
- 4: freies Ende
- 5: Scharnierbolzen
- 6: Bolzensitz
- 7: Bolzenaufnahme
- 8: Innenseite
- 9: Nut
- 10: Vorsprung
- 11: Außenumfang
- 12: Blechlasche
- 13: Steckabschnitt
- 14: Flansch
- 15: Außenumfang
- 16: Auflagefläche
- 17: Stirnseite
- 18: Gleitlagerfläche
- 19: Stirnfläche
- 20: Randseite
- 21: Arretierungshaken
- 22: Anschlag
- 23: Außenumfang
- 24: vorspringender Ansatz
- 25: Übergang
- 26: Befestigungsseite
- 27: gekerbter Abschnitt
- 28: umlaufende Nut
- 29: Aushebesicherung
- 30: Zylinderkörper
- 31: oberes Ende
- 32: unteres Ende
- 33: Griffstück
- 34: Zapfenvorsprung
- 35: oberer Einsteckkonus
- 36: unterer Einsteckkonus
- 37: Steckaufnahme
- 100: Schaltschrank
- 101: Türelement
- 102: Schaltschrankgehäuse
- 103: Vertikalprofil
- 104: Verbindungsabschnitt
- 105: Dichtkante
- 106: Dichtsteg
- 107: Seitenteil
- d: Abstand
- x: Vertikalrichtung
- z: vertikale Abmessung
- A: Scharnierachse

## Patentansprüche

1. Scharnieranordnung für einen Schaltschrank (100), mit einer gehäuseseitigen Scharnierhälfte (1) und einer türseitigen Scharnierhälfte (2), die verschwenkbar zueinander miteinander verbunden sind, wobei die gehäuseseitige Scharnierhälfte (1) einen Montageflansch (3) zur Befestigung an einem Vertikalprofil (103) eines Schaltschrankgehäuses (102) sowie zwei sich in Vertikalrichtung (x) erstreckende, in der Vertikalrichtung (x) unter einem Abstand (d) zueinander angeordnete und mit ihren freien Enden (4) einander zugewandte Scharnierbolzen (5) aufweist, die in jeweils einem Bolzensitz (6) der gehäuseseitigen Scharnierhälfte (1) aufgenommen sind und über ihre freien Enden (4) aus dem jeweiligen Bolzensitz (6) herausragen, **dadurch gekennzeichnet, dass** die Scharnierbolzen (5) in ihrem jeweiligen Bolzensitz (6) zumindest in der Vertikalrichtung (x) unter einem Abstand (d) zueinander unbeweglich aufgenommen sind, wobei die türseitige Scharnierhälfte (2) eine Bolzenaufnahme (7) mit einer vertikalen Abmessung (z) aufweist, die kleiner oder gleich dem Abstand (d) der freien Enden (4) der Scharnierbolzen (5) ist.

2. Scharnieranordnung nach Anspruch 1, bei der die gehäuseseitige Scharnierhälfte (1) symmetrisch zu einer Ebene ist, die senkrecht zu der Vertikalrichtung (x) und damit auch senkrecht zu einer Scharnierachse (A) der Scharnieranordnung verläuft, so dass die türseitige Scharnierhälfte (2) wahlweise für einen Linksanschlag eines Türelements (101) oder für den Rechtsanschlag eines Türelements (101) an einem linksseitigen oder einem rechtsseitigen Vertikalprofil (103) eines Schaltschrankgehäuses (102) montiert werden kann.

3. Scharnieranordnung nach Anspruch 2, bei der die gehäuseseitige Scharnierhälfte (1) bei einem ersten von Linksanschlag und Rechtsanschlag über einen ersten ihrer beiden Scharnierbolzen (5) mit der türseitigen Scharnierhälfte (2) in Eingriff steht, wobei die gehäuseseitige Scharnierhälfte (1) bei dem zweiten von Linksanschlag und Rechtsanschlag über den zweiten ihrer beiden Scharnierbolzen (5) mit der türseitigen Scharnierhälfte (2) in Eingriff steht.

4. Scharnieranordnung nach einem der vorangegangenen Ansprüche, bei der die gehäuseseitige Scharnierhälfte (1) an ihrer der türseitigen Scharnierhälfte (2) zugewandten Innenseite (8) mindestens eine Nut (9) aufweist, in die ein Vorsprung (10) am Außenumfang (11) der türseitigen Scharnierhälfte in der Offenstellung der türseitigen Scharnierhälfte (2) formschlüssig eingreift und die türseitige Scharnierhälfte (2) in Vertikalrichtung (x) und damit in Axialrichtung der Scharnierbolzen (5) festlegt.

5. Scharnieranordnung nach Anspruch 4, bei der die gehäuseseitige Scharnierhälfte (1) an ihrer der türseitigen Scharnierhälfte (2) zugewandten Innenseite (8) mindestens eine erste und eine zweite Nut (9) aufweist, wobei bei einem ersten von Linksanschlag und Rechtsanschlag der Vorsprung (10) in die erste Nut (9) formschlüssig eingreift, und wobei bei dem zweiten von Linksanschlag und Rechtsanschlag der Vorsprung (10) in die zweite Nut (9) formschlüssig eingreift.

6. Scharnieranordnung nach einem der vorangegangenen Ansprüche, bei der die Bolzensitze (6) der gehäuseseitigen Scharnierhälfte (1) und der jeweilige Scharnierbolzen (5) einteilig ausgebildet sind.

7. Scharnieranordnung nach einem der vorangegangenen Ansprüche, bei der die Bolzensitze (6) der gehäuseseitigen Scharnierhälfte (1) eine ringförmige Blechlasche (12) aufweisen, in die jeweils einer der Scharnierbolzen (5) über einen Steckabschnitt (13) eingesetzt ist, wobei die Blechlasche (12) mit dem Steckabschnitt (13) fest verbunden, insbesondere verpresst, verschweißt oder verklebt ist.

8. Scharnieranordnung nach Anspruch 7, bei der der Steckabschnitt (13) des Scharnierbolzens (5) über einen Flansch (14) am Außenumfang (15) des Scharnierbolzens (5) in das freie Ende (4) des Scharnierbolzens (5) übergeht, wobei der Flansch (14) an seiner dem Bolzensitz (6) zugewandten Seite eine Auflagefläche (16) aufweist, über die der Scharnierbolzen (5) formschlüssig auf einer Stirnseite (17) des Bolzensitzes (6) aufliegt, und wobei der Flansch (14) an seiner dem Bolzensitz (6) abgewandten Seite eine Gleitlagerfläche (18) aufweist, über die die gehäuseseitige Scharnierhälfte (1) auf einer Stirnfläche (19) der Bolzenaufnahme (7) der türseitigen Scharnierhälfte (2) lagert.

9. Scharnieranordnung nach einem der vorangegangenen Ansprüche, bei der die Bolzensitze (6) der gehäuseseitigen Scharnierhälfte (1) über eine Randseite (20) des Montageflansches (3) an den Montageflansch (3) angeformt sind, wobei auf halbem Abstand (d) zwischen den beiden freien Enden (4) der einander zugewandten Scharnierbolzen (5) ein Arretierungshaken (21) ausgehend von der Randseite (20) in Richtung der Scharnierbolzen (5) und senkrecht zur Axialrichtung (x) der Scharnierbolzen (5) vorspringt, und wobei der Arretierungshaken (21) an seinen gegenüberliegenden, jeweils einem der Scharnierbolzen (5) zugwandten Seiten jeweils einen Anschlag (22) für die türseitige Scharnierhälfte (2) aufweist.

10. Scharnieranordnung nach Anspruch 9, bei der die Bolzenaufnahme (7) der türseitigen Scharnierhälfte (2) an ihrem Außenumfang (23) eine unrunde Geometrie mit einem vorspringenden Ansatz (24) aufweist, wobei in der Offenstellung der türseitigen Scharnierhälfte (2) der vorspringende Ansatz (24) und der Arretierungshaken (21) überlappen, so dass sich je nach Anschlagseite der türseitigen Scharnierhälfte (2) einer der Anschläge (22) und der vorspringende Ansatz (24) gegenüberstehen.

11. Scharnieranordnung nach Anspruch 10, bei der die türseitige Scharnierhälfte (2) ein geformter Blechstreifen ist, bei dem der vorspringende Ansatz (24) an einem Übergang (25) zwischen einer Befestigungsseite (26) für die Montage der türseitigen Scharnierhälfte (2) an einem Türelement (101) und der Bolzenaufnahme (7) angeordnet ist.

12. Scharnieranordnung nach Anspruch 11, bei der der vorspringende Ansatz (24) und die Befestigungsseite (26) über einen gekerbten Abschnitt (27) des Blechstreifens miteinander verbunden sind.

13. Scharnieranordnung nach einem der vorangegangenen Ansprüche, die weiterhin eine Aushebesicherung (29) aufweist, die einerseits über eine obere Stirnfläche (19) der türseitigen Scharnierhälfte (2) auf die türseitigen Scharnierhälfte (2) aufgesetzt und in die Bolzenaufnahme (7) hineinragt, und in die andererseits der in der Vertikalrichtung (x) obere der beiden Scharnierbolzen (5) hineinragt.

14. Scharnieranordnung nach Anspruch 13, bei der die Aushebesicherung (29) einen Zylinderkörper (30) mit einem oberen und einem unteren Ende (31, 32) aufweist, wobei das obere Ende (31) eine Steckaufnahme (37) mit einem Einsteckkonus (35) am Innenumfang und das untere Ende (32) einen Zapfenvorsprung (34) mit einem unteren Einsteckkonus (36) am Außenumfang aufweist.

## Claims

1. Hinge arrangement for a switch cabinet (100) comprising a housing side hinge half (1) and a door-side hinge half (2) which are swivably connected to each other, wherein the housing-side hinge half (1) has a mounting flange (3) for securing to a vertical profile (103) of a switch cabinet housing (102) as well as two hinge bolts (5) extending in the vertical direction (x), arranged at a distance (d) to each other in the vertical direction (x) and facing each other with their free ends (4), wherein the hinge bolts (5) are accommodated in a respective bolt seat (6) of the housing-side hinge half (1) and protrude from the respective bolt seat (6) via their free ends (4), **characterized in that** the hinge bolts (5) are accommodated in their respective bolt seat (6) at a distance (d) from each other in a non-movable manner at least in the vertical direction (x) towards each other, wherein the door-side hinge half (2) has a bolt-receiving means (7) with a vertical dimension (z) that is less than or equal to the distance (d) of the free ends (4) of the hinge bolts (5).

2. The hinge arrangement according to claim 1, in which the housing-side hinge half (1) is symmetrical to a plane that runs perpendicular to the vertical direction (x) and therefore also perpendicular to a hinge axis (A) of the hinge arrangement, so that the door-side hinge half (2) can be mounted either for a left-hand stop of a door element (101) or for a right-hand stop of a door element (101) on a left-sided or right-sided vertical profile (103) of a switch cabinet housing (102).

3. The hinge arrangement according to claim 2, in which the housing-side hinge half (1) engages at a first of left-hand stop and right-hand stop by means of a first of its two hinge bolts (5) with the door-side hinge half (2), wherein the housing-side hinge half (1) engages at the second of left-hand stop and right-hand stop by means of the second of its two hinge bolts (5) with the door-side hinge half (2).

4. The hinge arrangement according to any of the preceding claims, in which the housing-side hinge half (1) has at its inner side (8) facing the door-side hinge half (2) at least one groove (9), into which a protrusion (10) at the outer circumference (11) of the door-side hinge half (2) engages in a form-fitting manner in the open position of the door-side hinge half (2) and fixes the door-side hinge half (2) in the vertical direction (x) and therefore in the axial direction of the hinge bolts (5).

5. The hinge arrangement according to claim 4, in which the housing-side hinge half (1) comprises at least a first and a second groove (9) at its inner side (8) facing the door-side hinge half (2), wherein at a first of left-hand stop and right-hand stop, the protrusion (10) engages with the first groove (9) in a form-fitting manner, and wherein at the second of left-hand stop and right-hand stop the protrusion (10) engages with the second groove (9) in a form-fitting manner.

6. The hinge arrangement according to any of the preceding claims, in which the bolt seats (6) of the housing-side hinge half (1) and the respective hinge bolt (5) are integrally formed.

7. The hinge arrangement according to any of the preceding claims, in which the bolt seats (6) of the housing-side hinge half (1) have an annular sheet metal wall (12) into which one of the hinge bolts (5) each is inserted by means of a plug section (13), wherein the sheet metal wall (12) is firmly connected to the plug section (13), in particular pressed into, welded to, or adhered.

8. The hinge arrangement according to claim 7, in which the plug section (13) of the hinge bolt (5) transitions to the free end (4) of the hinge bolt (5) via a flange (14) at the outer circumference (15) of the hinge bolt (5), wherein the flange (14) has a contact surface (16) at its side facing the bolt seat (6) by means of which the hinge bolt (5) rests on a front side (17) of the bolt seat (6) in a form-fitting manner, and wherein the flange (14) has a sliding bearing surface (18) at its side facing away from the bolt seat (6), by means of which the housing-side hinge half (1) bears on a front surface (19) of the bolt-receiving means (7) of the door-side hinge half (2).

9. The hinge arrangement according to any of the preceding claims, in which the bolt seats (6) of the housing-side hinge half (1) are formed onto the mounting flange (3) via an edge side (20) of the mounting flange (3), wherein, at half the distance (d) between the two free ends (4) of the hinge bolts (5) facing each other, a locking hook (21) protrudes from the edge side (20) in the direction of the hinge bolts (5) and perpendicular to the axial direction (x) of the hinge bolts (5), and wherein the locking hook (21) comprises at its opposing sides each facing one of the hinge bolts (5) each a stop (22) for the door-side hinge half (2).

10. The hinge arrangement according to claim 9, in which the bolt-receiving means (7) of the door-side hinge half (2) has at its outer circumference (23) a non-rounded geometry with a protruding lip (24), wherein in the open position of the door-side hinge half (2), the protruding lip (24) and the locking hook (21) overlap so that, depending on the side of the stop of the door-side hinge half (2), one of the stops (22) and the protruding lip (24) face each other.

11. The hinge arrangement according to claim 10, in which the door-side hinge half (2) is a formed metal strip on which the protruding lip (24) is arranged on a transition (25) between an attachment side (26) for the mounting of the door-side hinge half (2) on a door element (101) and the bolt-receiving means (7).

12. The hinge arrangement according to claim 11, in which the protruding lip (24) and the attachment side (26) are connected to each other by means of a notched section (27) of the metal strip.

13. The hinge arrangement according to any of the preceding claims, which further comprises an anti-lift device (29), which on the one hand sits on the door-side hinge half (2) by means of an upper front surface (19) of the door-side hinge half (2) and protrudes into the bolt-receiving means (7), and on the other hand into which the upper of the two hinge bolts (5) protrudes in the vertical direction (x).

14. The hinge arrangement according to claim 13, in which the anti-lift device (29) comprises a cylinder body (30) with an upper and a lower end (31, 32), wherein the upper end (31) comprises a plug receptacle (37) with an insertion cone (35) at the inner circumference and the lower end (32) a projecting peg (34) with a lower insertion cone (36) at the outer circumference.

## Revendications

1. Disposition de charnière pour une armoire de commande (100), avec une moitié de charnière côté boîtier (1) et une moitié de charnière côté porte (2), qui sont reliées entre elles de manière pivotante l'une par rapport à l'autre, la moitié de charnière côté boîtier (1) comprenant une bride de montage (3) pour la fixation à un profilé vertical (103) d'un boîtier d'armoire de commande (102) ainsi que deux axes de charnière (5) s'étendant dans la direction verticale (x), disposés dans la direction verticale (x) avec une distance (d) entre eux et orientés l'un vers l'autre avec leurs extrémités libres (4), qui sont logés chacun dans un siège d'axe (6) de la moitié de charnière côté boîtier (1) et qui dépassent chacun avec leurs extrémités libres (4) du siège d'axe (6) correspondant, **caractérisée en ce que** les axes de charnière (5) sont logés de manière fixe, chacun dans leur siège d'axe (6) respectif, au moins dans la direction verticale (x), avec une distance (d) entre eux, la moitié de charnière côté porte (2) comprenant un logement d'axe (7) avec une dimension verticale (z) qui est inférieure ou égale à la distance (d) entre les extrémités libres (4) des axes de charnière (5).

2. Disposition de charnière selon la revendication 1, dans laquelle la moitié de charnière côté boîtier (1) est symétrique par rapport à un plan qui est perpendiculaire à la direction verticale (x) et s'étend donc également perpendiculairement à un axe de charnière (A) de la disposition de charnière, de façon à ce que la moitié de charnière côté porte (2) puisse être montée soit pour une butée à gauche d'un élément de porte (101) soit pour une butée à droite d'un élément de porte (101) sur un profilé vertical (103) gauche ou droit d'un boîtier d'armoire de commande (102).

3. Disposition de charnière selon la revendication 2, dans laquelle la moitié de charnière côté boîtier (1) est emboîtée, lors d'une première parmi une butée à gauche et une butée à droite, par l'intermédiaire d'un premier de ses deux axe de charnière (5), avec la moitié de charnière côté porte (2), la moitié de charnière côté boîtier (1) étant emboîtée, lors d'une deuxième parmi une butée à gauche et une butée à droite, par l'intermédiaire d'un deuxième de ses deux axes de charnière (5), avec la moitié de charnière côté porte (2).

4. Disposition de charnière selon l'une des revendications précédentes, dans laquelle la moitié de charnière côté boîtier (1) comprend, au niveau du côté intérieur (8), orienté vers la moitié de charnière côté porte (2), au moins une rainure (9), dans laquelle s'emboîte, par complémentarité de forme, une saillie (10) sur la circonférence externe (11) de la moitié de charnière côté porte dans la position ouverte de la moitié de charnière côté porte (2) et fixe ainsi la moitié de charnière côté porte (2) dans la direction verticale (x) et donc dans la direction axiale des axes de charnière (5).

5. Disposition de charnière selon la revendication 4, dans laquelle la moitié de charnière côté boîtier (1) comprend, au niveau du côté intérieur (8), orienté vers la moitié de charnière côté porte (2), au moins une première et une deuxième rainure (9), moyennant quoi, lors d'une première parmi une butée à gauche et une butée à droite, la saillie (10) s'emboîte par complémentarité de forme dans la première rainure (9) et, dans la deuxième parmi une butée à gauche et une butée à droite, la saillie (10) s'emboîte par complémentarité de forme dans la deuxième rainure (9).

6. Disposition de charnière selon l'une des revendications précédentes, dans laquelle les sièges d'axes (6) de la moitié de charnière côté boîtier (1) et l'axe de charnière (5) correspondant sont constitués d'une seule pièce.

7. Disposition de charnière selon l'une des revendications précédentes, dans laquelle les sièges d'axes (6) de la moitié de charnière côté boîtier (1) comprennent une patte en tôle annulaire (12) dans laquelle est inséré un des axes de charnière (5) par l'intermédiaire d'une portion d'insertion (13), la patte en tôle (12) étant reliée de manière fixe avec la portion d'insertion (13), plus particulièrement pressée, soudée ou collée.

8. Disposition de charnière selon la revendication 7, dans laquelle la portion d'insertion (13) de l'axe de charnière (5) se transforme, par l'intermédiaire d'une bride (14) sur la circonférence externe (15) de l'axe de charnière (5), dans l'extrémité libre (4) de l'axe de charnière (5), la bride (14) comprenant, sur son côté orienté vers le siège d'axe (6), une surface d'appui (16) par l'intermédiaire de laquelle l'axe de charnière (5) s'appuie par complémentarité de forme sur une face frontale (17) du siège d'axe (6) et la bride (14) comprenant, sur son côté opposé au siège d'axe (6), une surface de palier lisse (18) par l'intermédiaire de laquelle la moitié de charnière côté boîtier (1) loge, sur une face frontale (19) du logement d'axe (7), la moitié de charnière côté porte (2).

9. Disposition de charnière selon l'une des revendications précédentes, dans laquelle les sièges d'axes (6) de la moitié de charnière côté boîtier (1) sont surmoulés, par l'intermédiaire d'un bord (20) de la bride de montage (3), sur la bride montage (3), moyennant quoi, à la moitié de la distance (d) entre les deux extrémités libres (4) des axes de charnière (5) orientés entre eux, dépasse un crochet d'arrêt (21) à partir du bord (20) en direction de l'axe de charnière (5) et perpendiculairement à la direction axiale (x) de l'axe de charnière (5) et le crochet d'arrêt (21) comprenant, sur chacun de ses côtés opposés, orientés chacun vers un des axes de charnière (5), une butée (22) pour la moitié de charnière côté porte (2).

10. Disposition de charnière selon la revendication 9, dans laquelle le logement d'axe (7) de la moitié de charnière côté porte (2) comprend, sur sa circonférence externe (23) une géométrie non circulaire avec un embout en saillie (24), moyennant quoi, dans la position ouverte de la moitié de charnière côté porte (2), l'embout en saillie (24) et le crochet d'arrêt (21) se superposent, de façon à ce que selon le côté de butée de la moitié de charnière côté porte (2), une des butées (22) et l'embout en saillie (24) soient l'un en face de l'autre.

11. Disposition de charnière selon la revendication 10, dans laquelle la moitié de charnière côté porte (2) est une bande de tôle formée, dans laquelle l'embout en saillie (24) est disposé au niveau d'une transition (25) entre un côté de fixation (26) pour le montage de la moitié de charnière côté porte (2) sur un élément de porte (101) et le logement d'axe (7).

12. Disposition de charnière selon la revendication 11, dans laquelle l'embout en saillie (24) et le côté de fixation (26) sont reliés entre eux par l'intermédiaire d'une portion entaillée (27) de la bande de tôle.

13. Disposition de charnière selon l'une des revendications précédentes, qui comprend en outre une sécurité anti-levage (29) qui est posée d'une part, par l'intermédiaire d'une face frontale supérieure (19) de la moitié de charnière côté porte (2), sur la moitié de charnière côté porte (2) et dépasse dans le logement d'axe (7) et dans laquelle d'autre part dépasse le plus haut des deux axes de charnière (5) dans la direction verticale (x).

14. Disposition de charnière selon la revendication 13, dans laquelle la sécurité anti-levage (29) comprend un corps cylindrique (30) avec une extrémité supérieure et inférieure (31, 32), l'extrémité supérieure (31) comprenant un logement d'insertion (37) avec un cône d'insertion (35) sur la circonférence interne et l'extrémité inférieur (32) comprenant un tenon en saillie (34) avec un cône d'insertion inférieur (36) sur la circonférence externe.
